# EUROPEAN PATENT APPLICATION

(11) **EP 4 807 519 A1**
(43) Date of publication of application: **16.09.2026**
(21) Application number: 26163423.2
(22) Date of filing: 09.03.2026
(51) Int. Cl.: G06F 3/12, G06F 11/07, G06F 16/242, G06N 20/00

(54) **PRINTER ERROR RESOLUTION MECHANISM**

(30) Priority: 12.03.2025 US 202519077603
(71) Applicant: Ricoh Company, Ltd., Tokyo 143-8555 (JP)
(72) Inventor: HAJIAHMADI FOOMANI, Farnaz, Boulder, 80301-9270 (US); JAVIDAN, Mahshad, Boulder, 80301-9270 (US); WING, Robert, Boulder, 80301-9270 (US); MANCHESTER, William E., Boulder, 80301-9270 (US)
(74) Representative: Marks & Clerk LLP

(57) **Abstract**

A system is described. The system comprises at least one physical memory device to store printer error resolution logic and one or more processors coupled with the at least one physical memory device to execute the printer error resolution logic to receive a subject error descriptor, generate processed data by data processing machine log data and reference service data, wherein the machine log data comprises machine log data associated with the subject error descriptor, perform a filtering operation to generate reference machine log data without subject error descriptors, compare the reference machine log data without error descriptors to the machine log data associated with the subject error descriptor to generate an error resolution request and transmit the processed data and the error resolution request to an advisor system for generation of one or more service recommendations for the subject error descriptor.

## Description

### FIELD

This invention relates generally to the field of print system servicing. More particularly, the invention relates to the efficient resolution of printer errors.

### BACKGROUND

Entities with substantial printing demands typically implement a high-speed production printer for volume printing (e.g., one hundred pages per minute or more). Production printers may include continuous-forms printers that print on a web of print media (or paper) stored on a large roll. A production printer typically includes a localized print controller that controls the overall operation of the printing system, and two tandem print engines for duplex printing that include one or more printhead assemblies, where each assembly includes a printhead controller and a printhead (or array of printheads). Each printhead includes many nozzles (e.g., inkjet nozzles) for the ejection of ink or any colorant suitable for printing on a medium.

### SUMMARY

In one embodiment, a system is disclosed. The system includes at least one physical memory device to store printer error resolution logic and one or more processors coupled with the at least one physical memory device to execute the printer error resolution logic to receive a subject error descriptor, generate processed data by data processing machine log data and reference service data, wherein the machine log data comprises machine log data associated with the subject error descriptor, perform a filtering operation to generate reference machine log data without subject error descriptors, compare the reference machine log data without error descriptors to the machine log data associated with the subject error descriptor to generate an error resolution request and transmit the processed data and the error resolution request to an advisor system for generation of one or more service recommendations for the subject error descriptor.

### BRIEF DESCRIPTION OF THE DRAWINGS

In the following drawings like reference numbers are used to refer to like elements. Although the following figures depict various examples, one or more implementations are not limited to the examples depicted in the figures.
**Figure 1** illustrates one embodiment of a system employing a printer error resolution mechanism.
**Figure 2** illustrates one embodiment of a printer error resolution mechanism.
**Figure 3** illustrates one embodiment of a printing system.
**Figure 4** illustrates one embodiment of a machine log data processor.
**Figure 5** illustrates one embodiment of stored tension machine log data.
**Figure 6A** is a flow diagram illustrating one embodiment of a process for generating a paper data table.
**Figure 6B** is a flow diagram illustrating one embodiment of a process for generating an error data table.
**Figure 6C** is a flow diagram illustrating another embodiment of a process for generating a paper data table and an error data table.
**Figures 7A** - **7C** illustrate embodiments of data tables.
**Figure 8A** is a flow diagram illustrating one embodiment of a process for generating a tension data table.
**Figure 8B** is a flow diagram illustrating another embodiment of a process for generating a tension data table.
**Figure 9** is a flow diagram illustrating a process for processing machine log data.
**Figure 10** illustrates one embodiment of reference service data processor.
**Figure 11A** is a flow diagram illustrating one embodiment for processing reference service data.
**Figure 11B** is a flow diagram illustrating another embodiment for processing reference service data.
**Figure 12A** illustrates one embodiment of a data processing engine.
**Figure 12B** illustrates one embodiment of a resolution request engine.
**Figure 12C** illustrates one embodiment of resolution request instructions associated with a subject error code.
**Figure 12D** illustrates one embodiment of a prompt.
**Figure 12E** illustrates another embodiment of a prompt.
**Figures 13A - 13C** illustrates one embodiment of service recommendations.
**Figure 14** is a flow diagram illustrating one embodiment for generating service recommendations.
**Figure 15** illustrates a computer system.

### DETAILED DESCRIPTION

Printer tension issues often rank among the most frequently reported incidents in production printer problem tracking. However, troubleshooting such tension issues is a time-consuming task that requires skilled printer service personnel, who often lack access to data analysis and visualization tools to aid in troubleshooting printer errors. Moreover, search capabilities for similar incidents that occur are inadequate. Thus, a lack of effective search and retrieval capabilities in available problem tracking software makes it challenging to identify similar incidents.

As used herein, error descriptors (e.g., error code, problem description, keyword, etc.) include descriptions associated with a problem to be resolved. The error descriptors may be categorized into one of a plurality of types (e.g., tension, print quality, fan, etc.) corresponding to the problem area of a machine. According to one embodiment, a printer error resolution mechanism is provided to facilitate error descriptor searches and problem resolutions. In a further embodiment, the printer error resolution mechanism automates error analysis and provides data driven insights by combining machine log data (e.g., print engine and printer controller data) with reference service data received from problem tracking software. Technical benefits include improved error resolution requests resulting in more effective error resolution process.

Reference in the specification to "one embodiment" or "an embodiment" means that a particular feature, structure, or characteristic described in connection with the embodiment is included in at least one embodiment of the invention. The appearances of the phrase "in one embodiment" in various places in the specification are not necessarily all referring to the same embodiment.

Throughout this document, terms like "logic", "component", "module", "engine", "model", "unit" and the like, may be referenced interchangeably and include, by way of example, software, hardware, and/or any combination of software and hardware, such as firmware. Further, any use of a particular brand, word, term, phrase, name, and/or acronym, should not be read to limit embodiments to software or devices that carry that label in products or in literature external to this document.

It is contemplated that any number and type of components may be added to and/or removed to facilitate various embodiments including adding, removing, and/or enhancing certain features. For brevity, clarity, and ease of understanding, many of the standard and/or known components, such as those of a computing device, are not shown or discussed here. It is contemplated that embodiments, as described herein, are not limited to any particular technology, topology, system, architecture, and/or standard and are dynamic enough to adopt and adapt to any future changes.

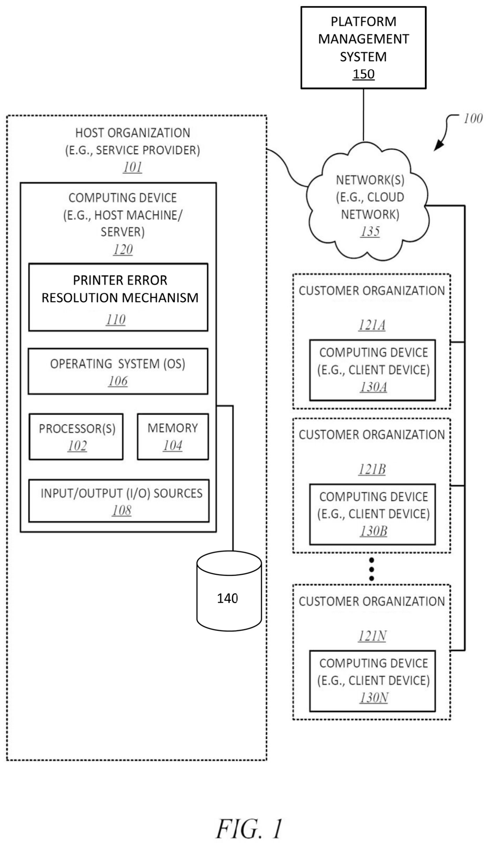

**Figure 1** illustrates a system 100 having a computing device 120 employing a printer error resolution (or error resolution) mechanism 110 according to one embodiment. Computing device 120 includes a host server computer serving as a host machine for employing error resolution mechanism 110 to facilitate printer error analysis and resolution. Computing device 120 may include (without limitation) server computers (e.g., cloud server computers, etc.), desktop computers, cluster-based computers, set-top boxes (e.g., Internet-based cable television set-top boxes, etc.), etc. Computing device 120 includes an operating system ("OS") 106 serving as an interface between one or more hardware/physical resources of computing device 120 and one or more client devices 130A-130N, etc. Computing device 120 further includes processor(s) 102, memory 104, input/output ("I/O") sources 108, such as touchscreens, touch panels, touch pads, virtual or regular keyboards, virtual or regular mice, etc.

In one embodiment, host organization 101 may further employ a print production environment that is communicably interfaced with client devices 130A-N through host organization 101. Client devices 130A-N may include (without limitation) customer organization-based server computers, desktop computers, laptop computers, mobile computing devices, such as smartphones, tablet computers, personal digital assistants, e-readers, media Internet devices, smart televisions, television platforms, wearable devices (e.g., glasses, watches, bracelets, smartcards, jewelry, clothing items, etc.), media players, global positioning system-based navigation systems, cable setup boxes, information technology equipment, industrial process equipment, vehicles, etc.

In one embodiment, computing device 120 may may be further in communication with one or more databases or storage repositories, such as database(s) 140, which may be located locally or remotely over one or more networks, such as network(s) 135 (e.g., cloud network, Internet, proximity network, intranet, Internet of Things ("IoT"), Cloud of Things ("CoT"), etc.). Database(s) 140 comprises a database system that may store (without limitation) information and underlying database records having customer and user data therein to facilitate printer error resolution on behalf of customer organizations 121A-N. In some embodiments, host organization 101 receives input and other requests from a plurality of customer organizations 121A-N over one or more networks 135; for example, incoming user requests, or other inputs may be received from customer organizations 121A-N to be processed using database system 140.

In one embodiment, each customer organization 121A-N is an entity selected from a group consisting of a separate and distinct remote organizations, an organizational group within host organization 101, a business partner of host organization 101, a customer organization 121A-N that subscribes to cloud computing services provided by host organization 101, etc.

In one embodiment, requests are received at, or submitted to, a web server within host organization 101. Host organization 101 may receive a variety of requests for processing by host organization 101. Further, host organization 101 may implement a request interface via the web server or as a stand-alone interface to receive requests packets or other requests from the client devices 130A-N. The request interface may further support the return of response packets or other replies and responses in an outgoing direction from host organization 101 to one or more client devices 130A-N.

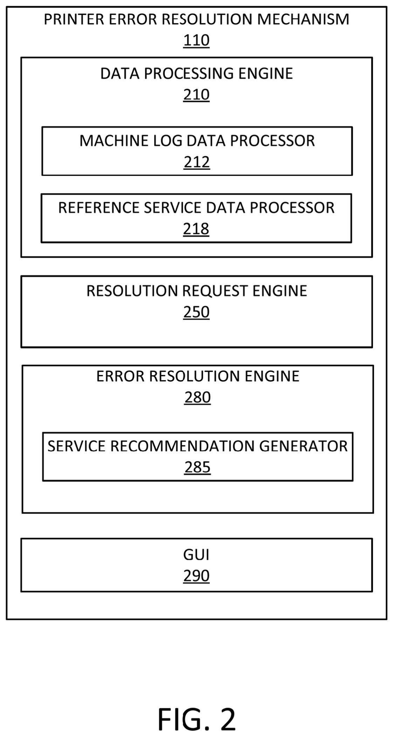

**Figure 2** illustrates error resolution mechanism 110 of Figure 1 according to one embodiment. In one embodiment, error resolution mechanism 110 may include any number and type of components, such as data processing engine 210, resolution request engine 250, error resolution engine 280 and graphical user interface (GUI) 290.

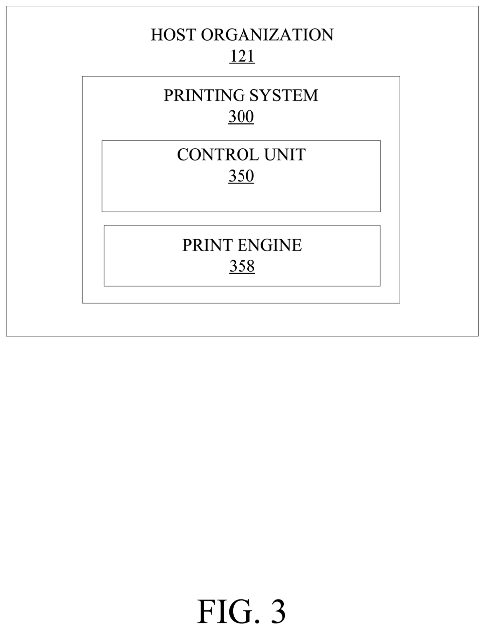

According to one embodiment, each customer organization 121 includes one or more printing systems that support print services for the organization 121. **Figure 3** illustrates one embodiment of a printing system 300. Printing system 300 includes a control unit 350 and a print engine 358. According to one embodiment, control unit 350 processes and renders objects received in print job data and provides sheet maps for printing to print engine 358. Further, control unit (e.g., DFE or digital front end) 350 is implemented to process received image objects by a raster image processor (RIP) to convert an image described in a vector graphics format (e.g., shapes) into a raster image (e.g., pixels) that is to be stored as scan line data in a memory array (not shown) for output to print engine 358.

Referring back to **Figure 1****,** error resolution mechanism 110 may retrieve reference service data from a platform management system 150. In one embodiment, platform management system 150 may include problem tracking software that generates the reference service data. In a further embodiment, reference service data may include a plurality of reference error descriptors (e.g., error codes) and reference problem resolutions (e.g., confirmed problem resolutions corresponding to each of the reference error descriptors. Resulting technical benefits include providing higher quality problem resolution request data that result in more effective problem resolutions.

According to one embodiment, printer error resolution logic receives a subject error descriptor, generate processed data by data processing machine log data and reference service data based on the subject error descriptor, generate an error resolution request based on the subject error descriptor and transmits the processed data and the error resolution request to an advisor system for generation of one or more service recommendations for the subject error descriptor. Resulting technical benefits include generating relevant service recommendations.

In a further embodiment, printer error resolution logic receives subject error descriptor, receives a subject error descriptor, generates data processing instructions based on a data processing engine and the subject error descriptor, generates processed data by data processing machine log data and reference service data based on the data processing instructions and generates an error resolution request based on the subject error descriptor and transmits the processed data and the error resolution request to an advisor system for generation of one or more service recommendations for the subject error descriptor. Resulting technical benefits include generating relevant service recommendations.

In yet a further embodiment, printer error resolution logic receives a subject error descriptor, generates processed data by data processing machine log data and reference service data, performs a filtering operation to generate reference machine log data without subject error descriptors, compares the reference machine log data without error descriptors to the machine log data associated with the subject error descriptor to generate an error resolution request and transmits the processed data and the error resolution request to an advisor system for generation of one or more service recommendations for the subject error descriptor. In such an embodiment, the machine log data comprises machine log data associated with the subject error descriptor. Resulting technical benefits include generating relevant service recommendations.

Referring back to **Figure 2****,** data processing engine 210 includes machine log data processor 212 and reference service data processor 218. Machine log data processor 212 retrieves machine log data from a printing system 300 (e.g., control unit 350 and print engine 358). In one embodiment, the retrieval of the machine log data is triggered upon receiving a user request from a client device 130 in a customer organization 121 via GUI 290. In this embodiment, the user request includes an error code and printing system 300 identifier (ID) data. In a further embodiment, the ID data comprises an error code date, a tenant ID associated with a tenant (e.g., customer organization 121) requesting resolution of a printer error, a printer ID associated with the printer having the error code.

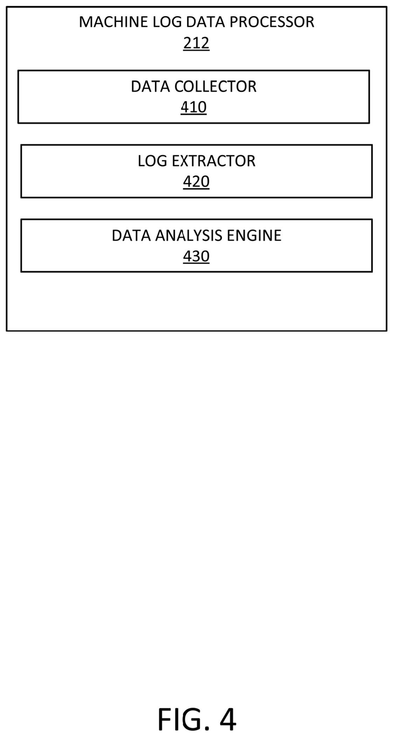

**Figure 4** illustrates one embodiment of machine log data processor 212. As shown in **Figure 4****,** machine log data processor 212 includes a data collector 410 to retrieve the machine log data. Log extractor 420 parses machine log data received from a printing system 300 to extract key data points and transform the machine log data into a structured format (e.g., a data table). Thus, log extractor 420 extracts and stores the machine log data table associated with the received error code (e.g., in a database 140). For example, the extracted machine log data may be associated with printer features, such as tension, print quality, fans. Machine log data may be data acquired during single tenant and multi-tenant implementations of error resolution mechanism 110.

According to one embodiment, a single tenant application implements machine log data associated with a single printing system 300 of a customer organization 121 to perform printer error resolution, while a multi-tenant application implements machine log data associated with two or more printing systems 300 (e.g., multiple printing systems 300 operated by a single customer organization 121 or two or more customer organizations) to perform printer error resolution. Accordingly, machine log data may comprise error descriptors (e.g., subject error codes, printer error codes, tension error codes, print quality error codes, fan error codes, etc.), time series data (e.g., a collection of data points recorded or measured at successive points in time), printer cycle data (e.g., identification of the printer cycle corresponding to events such as printing, cycling up, or paper advance), and event measurement data (e.g., paper tensions, temperatures, speeds, etc.). Resulting technical benefits include providing more data and/or more problem specific data resulting in more effective problem resolutions.

In a further embodiment, the machine log data may include multi-tenant data (or reference machine log data) that includes machine data from a plurality printing systems 300 that are different from a printing system 300 at which an error being resolved occurred. In yet a further embodiment, the multi-tenant machine log data may include data from a same printing systems 300 that occurred prior to the occurrence of the current error being resolved(e.g., last week, last month, etc.). Resulting technical benefits includes including data from other machines or occurrence times in error requests that result in more effective error resolution process.

In still a further embodiment, reference machine log data may include measurement data (e.g., measurement data values) that have been averaged and used as target values. In such an embodiment, averaging may be segregated with matching event cycles between machine log data associated with a current error code and reference machine log data. Data analysis engine 430 is implemented to analyze the machine log data for data processing. According to one embodiment, data analysis engine 430 performs one or more filtering operations (e.g., filtering to include relevant data and remove extraneous data) to prepare the machine log data for query of error resolution engine 280 (an advisor system). Resulting technical benefits include providing data specific to the problem which results in determining more effective problem resolutions.

In one embodiment, error resolution engine 280 is configured to output error resolution instructions in response to one or more input error resolution request instructions. Error resolution engine 280 may be implemented using artificial intelligence (AI), large language models (LLMs), logic circuits, computer-implemented software algorithms, data tables, or combinations of these. The error resolution request instructions include a detailed request (e.g., commands, prompts, etc.) for instructions to resolve an error condition (a problem condition). The error resolution instructions include detailed instructions (e.g., natural language steps, figures, etc.) or links to detailed instructions to resolve the error condition. In another embodiment, the error resolution instructions may be generated for a human (e.g., customer, operator, or trained service person) to perform. Although illustrated as being included within printer error resolution mechanism 110, other embodiments may implement error resolution engine 280 as a separate, communicably coupled, component.

In another embodiment, error resolution engine 280 comprises a large language model (LLM) that performs natural language processing tasks (e.g., language generation). Thus, data analysis engine 430 filters and rearranges data to assist error resolution engine 280 in understanding the machine log data.

In one embodiment, a filtering operation on the machine log data comprises determining an occurrence time of an error code and filtering the machine log data to include other events that occur at the same time as the event associated with the error code. In embodiments, reference machine log data may be filtered based on metadata and/or event data. In those embodiments, the filtering is performed by matching metadata (e.g., machine types, customer name, location, machine settings, code level, etc.) and/or event data (e.g., error description, print cycle, measured values, etc.) to machine log data associated with the printing system 300 associated with the error code. Resulting technical benefits include creating relevant data that results in improved resolution requests and more effective problem resolutions.

According to one embodiment, printer error resolution mechanism 110 may be implemented to resolve a request for a tension problem that has occurred at a printing system 300. In such an embodiment, the error code (error descriptor) is a tension error code, the machine log data includes tension measurement values and processing the machine log data comprises identifying tension measurement value deviations from target tension values. Resulting technical benefits include focusing the error resolution process on a specific type of problem.

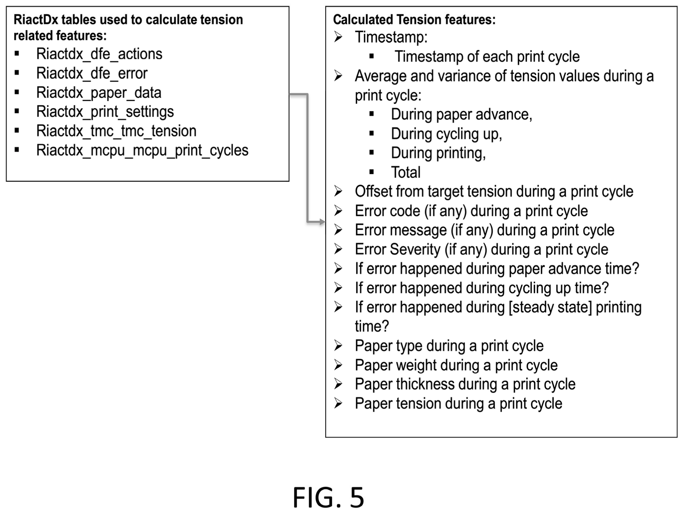

To resolve a tension error, data analysis engine 430 performs one or more analyst functions on the machine log data. For example, data analysis engine 430 generates tension analyst functions. In this embodiment, data analysis engine 430 calculates and stores features related to tension from the machine log data tables. Since tension exists and varies only during print cycle, tension features are calculated for each print cycle. Therefore, stored timestamp data matches the timestamp of the start of a print cycle. **Figure 5** illustrates one embodiment of stored tension machine log data.

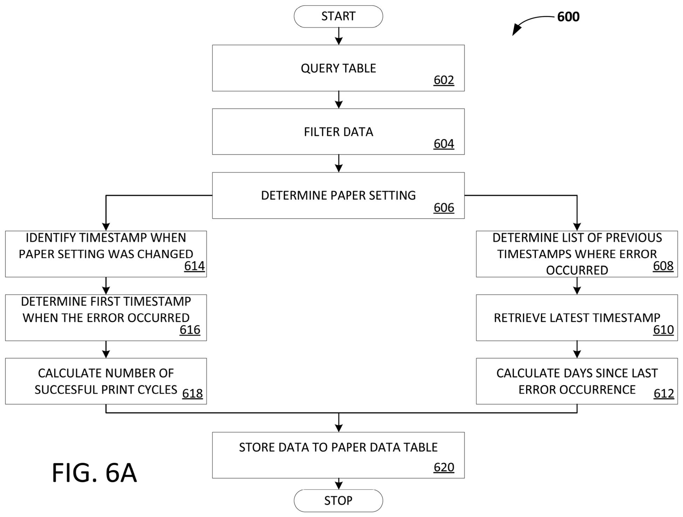

Data analysis engine 430 further executes a first function (Function I) to filter and rearrange machine log data to generate paper data information at the time of error. Thus, Function I execution results in the generation of a paper data table and error data table. **Figure 6A** is a flow diagram illustrating a process 600 for execution of a function to generate a paper data table. Process 600 may be performed by processing logic that may include hardware (e.g., circuitry, dedicated logic, programmable logic, microcode, etc.), software such as instructions run on a processing device, or a combination thereof. In one embodiment, process 600 is performed by data analysis engine 430.

At processing block 602, a data table is accessed. In one embodiment, the table is accessed using a tenant ID and a printer ID. In such an embodiment, the table includes data from a predetermined period (e.g., seven days) prior to the provided error date. At processing block 604, data returned from the query is filtered based on the error code and the error date. At processing block 606, the paper settings used during the error is determined.

At processing block 608, a list of previous timestamp machine log data (or timestamps) is determined in which the same error occurred for the same paper settings. At processing block 610, a most recent timestamp prior to the error date is retrieved in which the same error occurred for the same paper setting. At processing block 612, the number of days since a last occurrence of the same error with similar paper settings is calculated. At processing block 620, this data is stored in a paper data table.

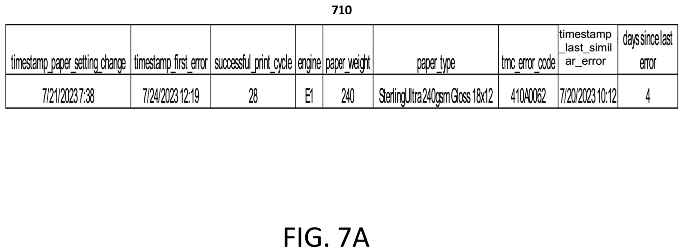

At processing block 614, a timestamp is identified at which the paper setting was changed to a current configuration (Tc). At processing block 616, a first timestamp at which the error occurred on the error date is determined (Te). At processing block 618, the number of successful print cycles without errors that occurred between Tc and Te is calculated. At processing block 620, this data is stored in the paper data table. **Figure 7A** illustrates one embodiment of a paper data table 710 generated by process 600. Paper data table 710 data may include timestamp when the current paper setting changed, timestamp of the first error with the current paper setting, number of successful printer cycles with the same print setting before failure, print engine identification, paper weight, paper type, error code, timestamp of the previous similar error, and/or number of days since last similar error.

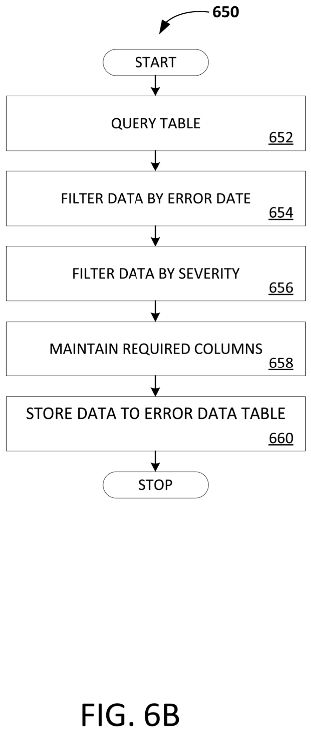

**Figure 6B** is a flow diagram illustrating one embodiment of a process 650 for generating an error data table for the tension error. Process 650 may be performed by processing logic that may include hardware (e.g., circuitry, dedicated logic, programmable logic, microcode, etc.), software such as instructions run on a processing device, or a combination thereof. In one embodiment, process 650 is performed by data analysis engine 430.

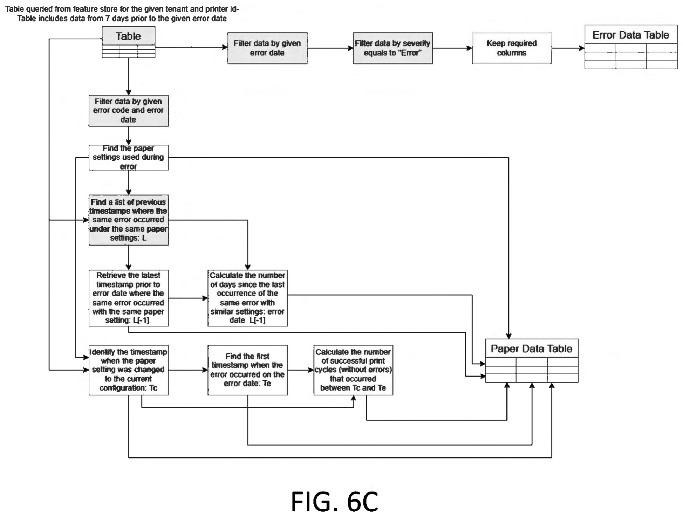

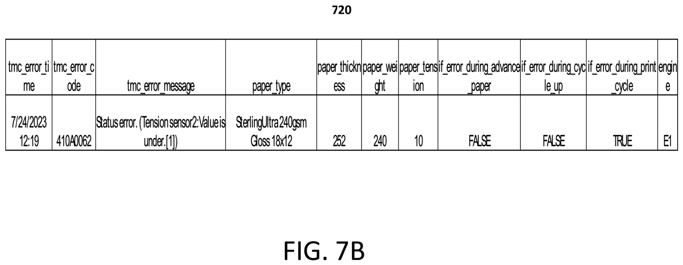

At processing block 652, the data table is queried. In one embodiment, the query returns data including all the errors that happened in the same date as the date of the queried error. At processing block 654, the data is filtered by the error date. At processing block 656, the data is filtered by error severity. In one embodiment, data is filtered to include the error and exclude warnings and unrelated information. At processing block 658, the required columns are maintained. At processing block 660, the columns of data are stored in an error data table. **Figure 6C** is a flow diagram illustrating another embodiment of a process for generating the paper data table and the error data table. **Figure 7B** illustrates one embodiment of an error data table 720 generated by process 650. Error data table 720 data may include error timestamp, error codes, error message, paper type, paper thickness, paper tension, indicator confirming if error happened during advance paper, indicator confirming if error happened during cycling up, indicator confirming if error happened during printing, and/or indicator for which print engine the error happened on.

Data analysis engine 430 also executes a second function (Function II) to filter and rearrange machine log data to generate average tension values at the time of the error. Thus, Function II execution results in the generation of a tension data table in a tension error embodiment.

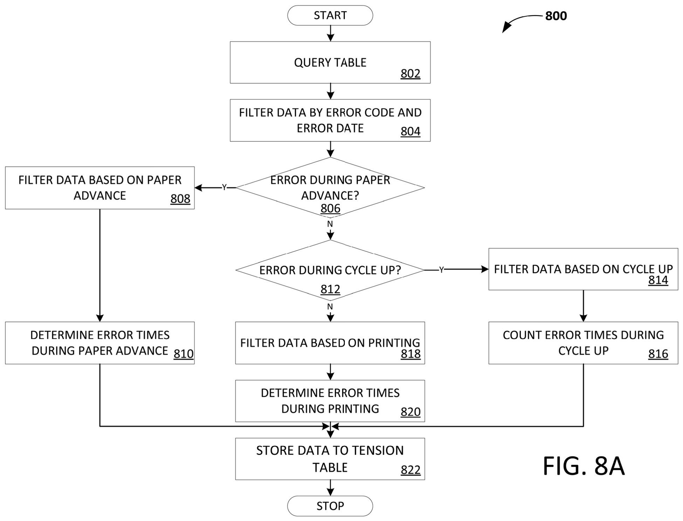

**Figure 8A** is a flow diagram illustrating one embodiment of a process 800 for execution of a function to generate a tension data table. Process 800 may be performed by processing logic that may include hardware (e.g., circuitry, dedicated logic, programmable logic, microcode, etc.), software such as instructions run on a processing device, or a combination thereof. In one embodiment, process 800 is performed by data analysis engine 430.

At processing block 802, the machine log data table is queried using the tenant ID and the printer ID over the predetermined period. At processing block 804, the data is filtered using the error code and error date. At decision block 806, a determination is made as to whether the error occurred during a paper advance. If so, the data is further filtered by the average tension values during the paper advance, processing block 808. At processing block 810, the number of times the error occurred during the paper advance is determined. At processing block 822, this data is stored in a tension data table.

Upon a determination at decision block 806 that the error did not occur during a paper advance, a determination is made as to whether the error occurred during a cycle up, decision block 812. If so, the data is filtered by the average tension values during the cycle up, processing block 814. At processing block 816, the number of times the error occurred during the cycle up is determined. At processing block 822, this data is stored in a tension data table.

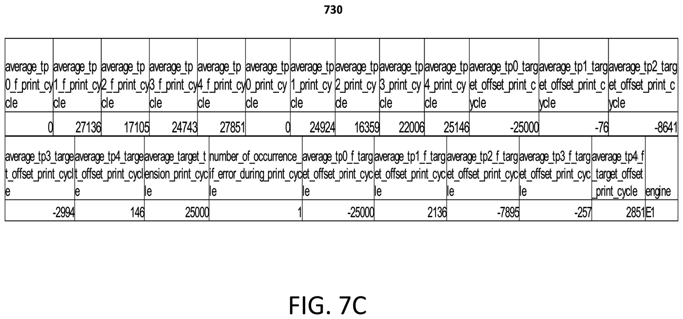

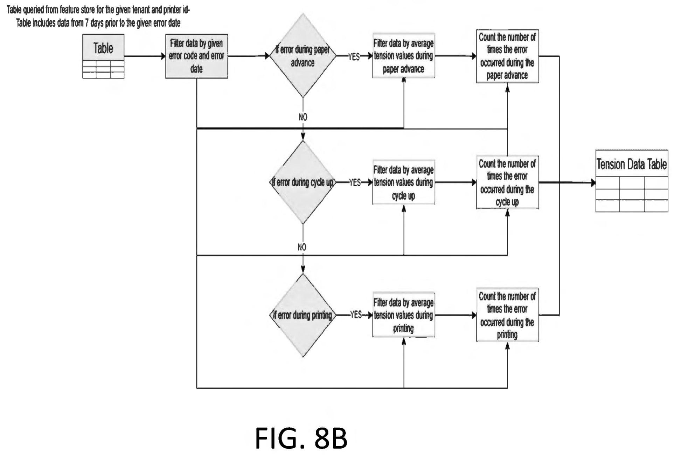

Upon a determination at decision block 812 that the error did not occur during a cycle up, it is determined that the error occurred during printing. Thus, the data is filtered by the average tension values during printing, processing block 818. At processing block 820, the number of times the error occurred during printing is determined. At processing block 822, this data is stored in a tension data table. **Figure 7C** illustrates one embodiment of a tension data table 730 generated by process 800. **Figure 8B** is a flow diagram illustrating another embodiment of a process for generating a tension data table.

According to one embodiment, data analysis engine 430 further executes a third function (Function III), which results in in the generation of a plot function for tension value.

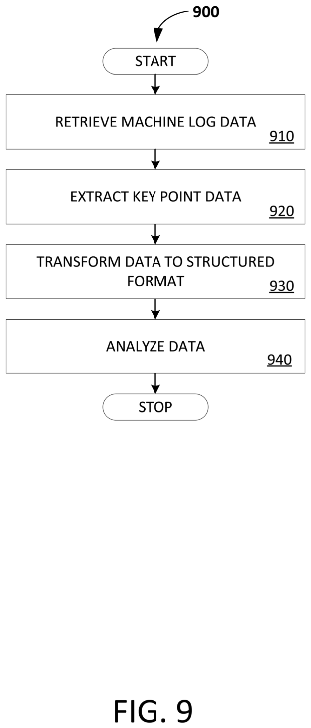

**Figure 9** is a flow diagram illustrating a process 900 for processing machine log data. Process 900 may be performed by processing logic that may include hardware (e.g., circuitry, dedicated logic, programmable logic, microcode, etc.), software such as instructions run on a processing device, or a combination thereof. In one embodiment, process 900 is performed by machine log data processor 212.

At processing block 910, the machine log data is retrieved from a printing system 300. At processing block 920, key data point data is extracted from the retrieved machine log data. At processing block 930, the extracted log machine data is transformed into a structured format. At processing block 940, the log machine data is analyzed to generate data (e.g., tables) for error code processing. As discussed above, to generate the tension analyst functions. According to one embodiment, the above process is performed in real time upon receiving a user request.

Referring back to **Figure 2****,** data processing engine 210 also includes a reference service data processor 218 implemented to process reference service data received from platform management system 150. In one embodiment, reference service data comprises incident reports received from customer organizations 121 regarding various printer errors. Reference service data may also comprise machine problems (e.g., error codes) and corresponding confirmed problem resolutions. In other words, reference service data comprises a plurality of reference error codes and reference problem resolutions corresponding to each of the reference codes.

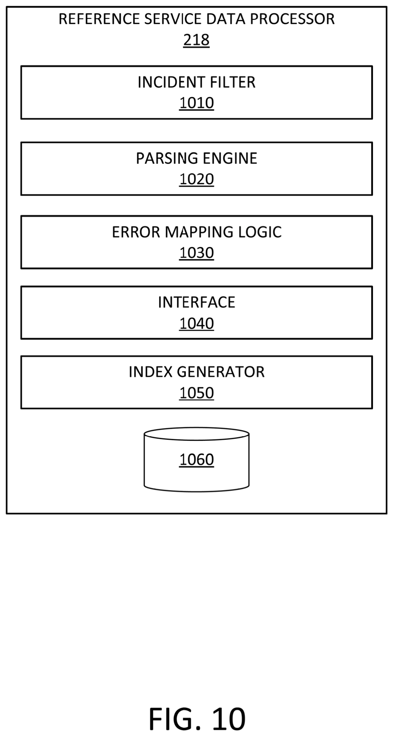

Reference service data may also comprise error descriptors (e.g., subject error code, printer error code, tension error code, print quality error code, fan error code, etc.), time series data (e.g., a collection of data points recorded or measured at successive points in time), printer cycle data (e.g., identification of the printer cycle corresponding to events such as printing, cycling up, or paper advance), and event measurement data (e.g., paper tensions, temperatures, speeds, etc.). Resulting technical benefits include providing more data and/or more problem specific data resulting in a more effective problem resolution process. **Figure 10** illustrates one embodiment of reference service data processor 218.

As shown in **Figure 10****,** reference service data processor 218 includes incident filter 1010 that filters reference service data based on error code. In one embodiment, reference service data may be filtered by metadata (e.g., machine types, customer name, location, machine settings, code level, etc.) and/or event data (e.g., error description, event cycles, measured values, etc.).

In a further embodiment, filter 1010 filters each error code type by filtering descriptions included in each incident report. In such an embodiment, incidents may be filtered based on a pre-defined keyword set (e.g., error codes, error messages, related replaceable components, etc.) associated with each error code category included in incident report descriptions. For example, tension incidents may be filtered based on incidents descriptions that include a tension error code (e.g., "410A") or error message (e.g., "TMC board"). Incident filter 1010 exports the filtered reference service data to a text file including comma-separated values (CSV). The text file may include an issue description and working notes, which include a resolution to the error and service team conversations that occurred while resolving the error.

Reference service data processor 218 also includes a parsing engine 1020 that parses the CSV file to extract error codes. In one embodiment, parsing engine 1020 implements a pattern matching process (e.g., Regex) that describes a set of strings that matches the pattern. Thus, parsing engine 1020 accepts error codes and excludes the other text in reference service data. Parsing engine 1020 subsequently updates the CSV file by adding the error codes to a new column.

Error mapping logic 1030 maps an error message to each error code included in the CSV file. In one embodiment, error messages comprise corresponding error codes implemented in service documentation associated with a printing system 300. Interface 1040 interfaces to error resolution engine 280 to provide resolution requests to and receive resolution request responses from error resolution engine 280. In another embodiment, Interface 1040 interfaces with error resolution engine 280 to categorize and prioritize resolutions for each error code. In one embodiment, interface 1040 provides the CSV file and prompts to error resolution engine 280 that instructs error resolution engine 280 to categorize and prioritize resolutions for each error code in the CSV file, thus enabling efficient resolution of errors.

Error resolution engine 280 generates a storage file including the resolutions for each error code. In one embodiment, the storage file comprises a PDF file format that is saved. Index generator 1050 performs vector embedding and indexing to generate an error resolution index comprising a representation of words, phrases, or documents as numerical vectors, which allows for efficient computation and comparison of semantic meaning. Index generator 1050 stores the error resolution indexes in database 1060. In embodiments, database 140 comprises database system 1060.

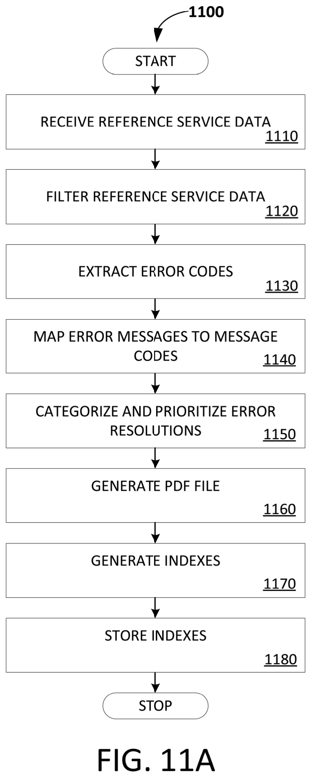

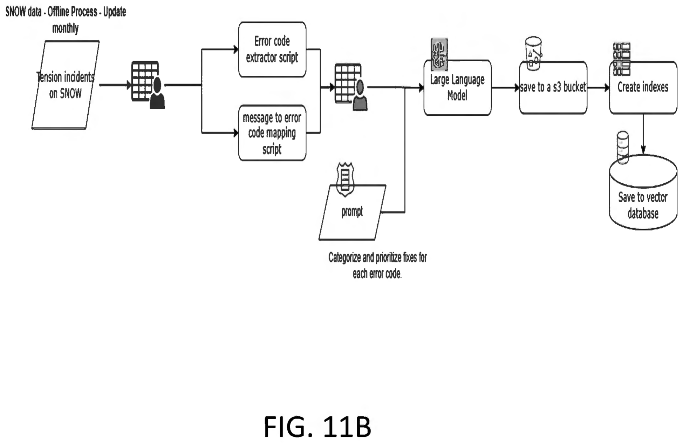

**Figure 11A** is a flow diagram illustrating a process 1100 for processing reference service data. Process 1100 may be performed by processing logic that may include hardware (e.g., circuitry, dedicated logic, programmable logic, microcode, etc.), software such as instructions run on a processing device, or a combination thereof. In one embodiment, process 1100 is performed by reference service data processor 218.

At processing block 1110, referenced service data is received from platform management system 150. At processing block 1120, the reference service data is filtered. At processing block 1130, error codes are extracted from the reference service data. At processing block 1140, error messages are mapped to the error codes. At processing block 1150, error resolutions are categorized and prioritized. At processing block 1160, a PDF file is generated. At processing block 1170, error resolution indexes are generated from the PDF file. At processing block 1180, the error resolution indexes are stored (e.g., stored in database 1060).

The above-described process may be performed online during production or offline when production is not running and may be repeated periodically (e.g., monthly) as new incident reports are received.

Referring back to **Figure 2****,** resolution request engine 250 is implemented to generate an error resolution request based on a received error descriptor (e.g., error code, problem description, keyword, etc.) and transmit the error resolution request with instructions to access processed data (e.g., the processed machine log data and processed reference service data) to error resolution engine 280 for generation of one or more service recommendations for the error descriptor.

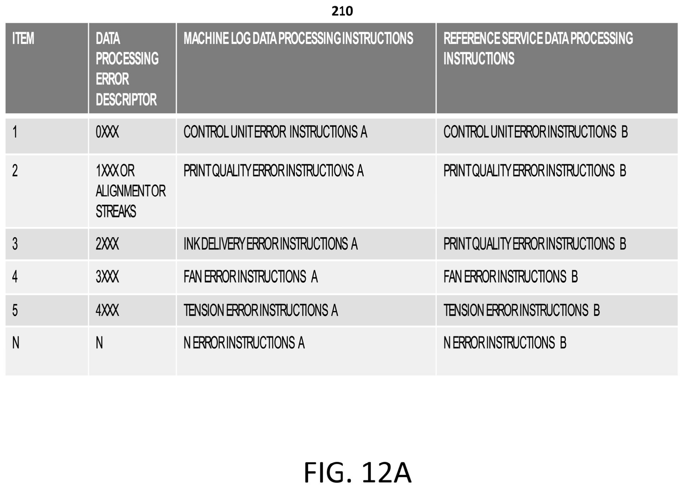

In one embodiment, data processing engine 210 is configured to output generated data processing instructions (e.g., machine log data processing instructions and/or reference service data processing instructions) in response to one or more input data processing error descriptors. In another embodiment, data processing engine 210 comprises a plurality of data processing error descriptors and a plurality of data processing instructions corresponding (e.g., mapped) to the data processing error descriptors. Technical benefits include determining data processing instructions that are more relevant to the problem resulting in more effective problem resolution process. Data processing engine 210 may be implemented using artificial intelligence (AI), large language models (LLMs), logic circuits, software algorithms, data tables, or combinations of these. The data processing error descriptors may include error codes, error keywords, and/or other characters that describe an error condition (a problem condition). The data processing instructions (e.g., machine log data processing instructions and/or reference service data processing instructions) include detailed instructions (e.g., commands, prompts, etc.) or links to detailed instructions for performing actions on data (databases) such as filtering, ranking, sorting, and/or merging. In one embodiment, the generated machine log data processing instructions and reference service data processing instructions are different from each other yielding a technical benefit of being tailored to the specific data. For example, a received subject error code indicating a tension error is matched to a data processing instruction indicating that the data (e.g., machine log data and/or reference service data) is to be processed according to instructions associated with tension error processing (e.g., using the analyst functions discussed above). **Figure 12A** illustrates one embodiment of a data processing engine 210. As shown in **Figure 12A****,** data processing instruction engine 210 includes a mapping of data processing error descriptors and associated data processing instructions (e.g., machine log data processing instructions and/or reference service data processing instructions). According to one embedment, data processing instructions identify event measurement value deviations from event measurement values. According to another embodiment, input tension error code returns generated machine log data processing instructions that specify extracting tension values and corresponding offset from tension target values for each tension error occurrence to simplify comparison of the values. Resulting technical benefits include data instructions that when processed provide deviation from target data for inclusion in resolution requests that result in a more effective error resolution process.

Resolution request engine 250 instructs machine log data processor 212 to process the machine log data according to the generated machine log data processing instructions. Machine log data processor 212 subsequently processes the machine log data based on the generated machine log data processing instructions. Similarly, resolution request engine 250 also instructs reference service data processor 218 to process the reference service data according to the generated reference service data processing instructions. Reference service data processor 218 subsequently processes the reference service data based on the generated reference service data processing instructions.

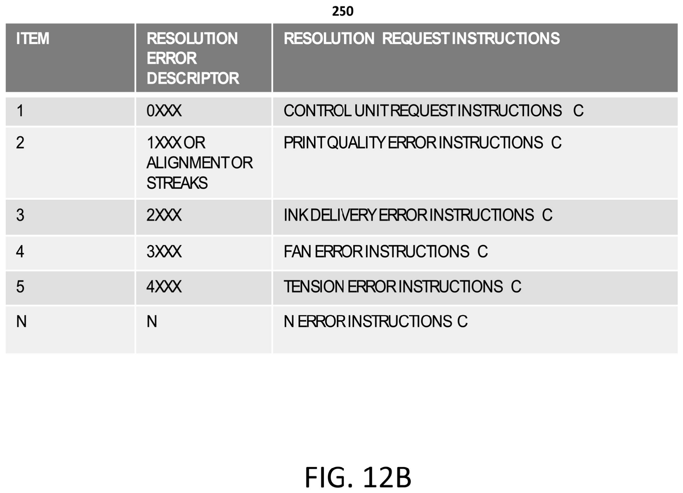

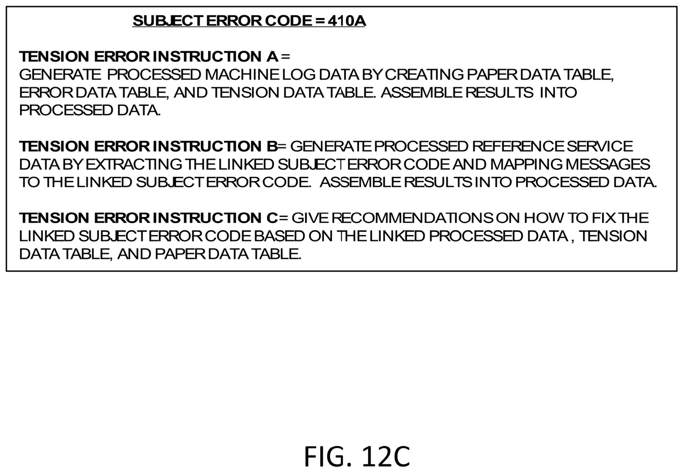

In one embodiment, resolution request engine 250 is configured to generate resolution request instructions in response to one or more input resolution error descriptors. In another embodiment, resolution request engine 250 comprises a plurality of resolution error descriptors and a plurality of resolution request instructions corresponding (e.g., mapped) to the plurality of error resolution descriptors. Technical benefits include determining error resolution instructions that are more relevant to the problem resulting in more effective problem resolution process. This module can be implemented using artificial intelligence (AI), large language models (LLMs), logic circuits, computer-implemented software algorithms, data tables, or combinations of these. The resolution error descriptors may include error codes, error keywords, and/or other characters that describe the error condition. The resolution request instructions include detailed instructions (e.g., commands, prompts, etc.) or links to detailed instructions for requesting service information to resolve the error condition and are compatible with error resolution engine 280. **Figure 12B** illustrates one embodiment of a resolution request engine 250. As shown in **Figure 12B****,** resolution request engine 250 includes a mapping of resolution error descriptors and associated resolution request instructions. **Figure 12C** illustrates one embodiment of instructions associated with a subject error code 410A. As shown in **Figure 12C****,** subject error code 410A includes tension error instructions A, B and C indicating instructions for data processing and resolution requests for the associated error code 410A.

In one embodiment, an error resolution request includes one or more error resolution request instructions that are to be transmitted to error resolution engine 280. In this embodiment, the error resolution instructions include instructions to access error resolution engine 280.

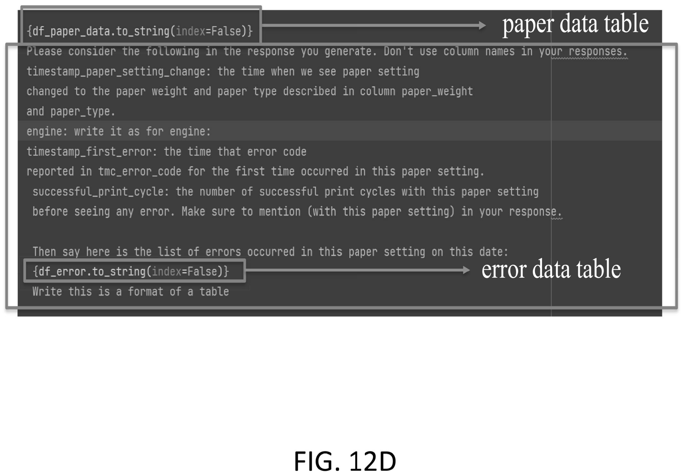

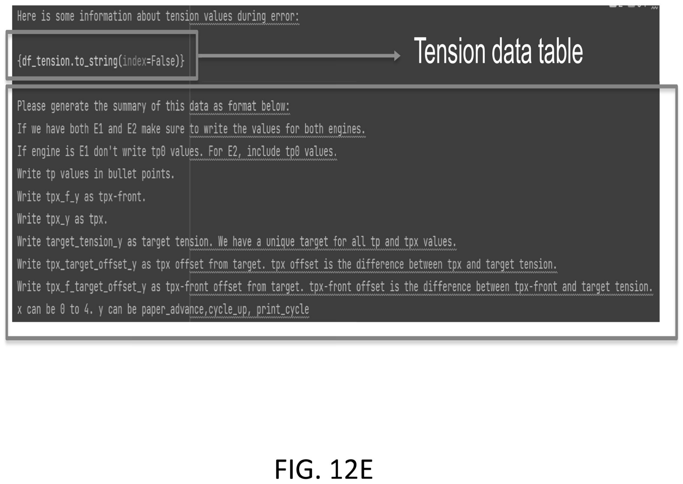

According to one embodiment, an error resolution request includes one or more prompts including the error resolution request instructions that specify a resolution to a tension malfunction is requested. In the tension error embodiment, the error resolution instructions include instructions to access the generated tables associated with an error code received in a user request. For instance, resolution request engine 250 may generate error resolution request instructions (e.g., a prompt, function call, etc.) that include instructions to access the paper data table and error data table to generate paper data, as well as instructions to access the tension data table to generate tension values. Additionally, the error resolution request instructions may include instructions regarding data, definition of table columns, how column names are to be used, as well as the format of the response. **Figure 12D** illustrates one embodiment of a prompt provided by resolution request engine 250 to error resolution engine 280 to generate paper data. As shown, the prompt includes instructions that enable error resolution engine 280 to access the paper data table and the error data table. **Figure 12E** illustrates one embodiment of a prompt provided by resolution request engine 250 including instructions enabling error resolution engine 280 to access the tension data table to generate tension values. Resulting technical benefits include providing more data and/or more problem specific data resulting in a more effective problem resolution.

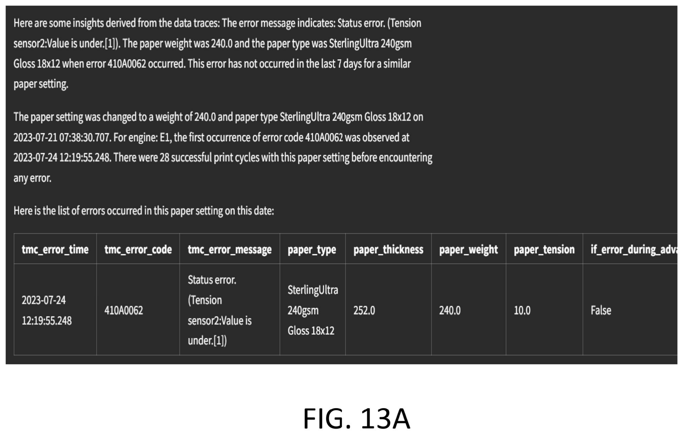

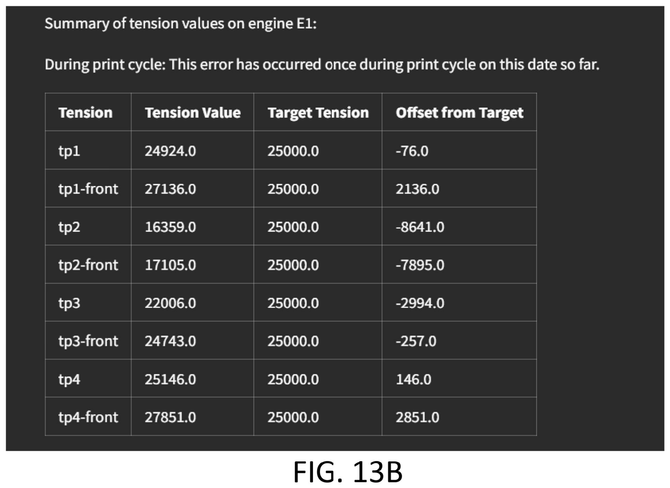

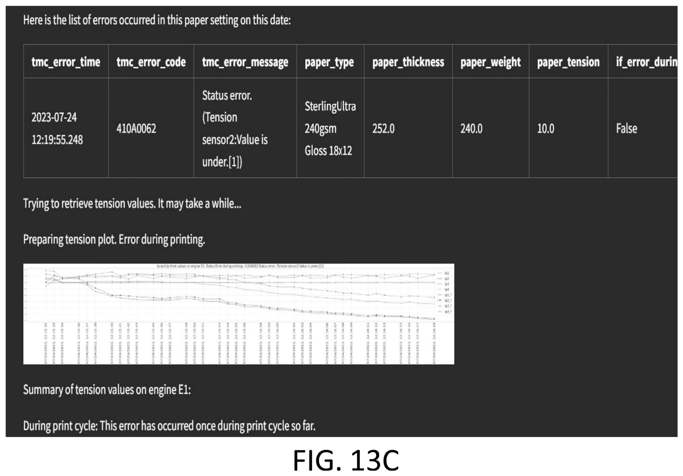

In one embodiment, error resolution engine 280 includes a service recommendation generator 285 that receives the prompts and generates service recommendations based on instructions included in the prompts. Using the above tension analysis embodiment, service recommendation generator 285 receives the prompts requesting the generation of paper data and tension values, accesses the instructed tables (e.g., paper data, error data and tension data) included in the respective prompts and generates one or more service recommendations. **Figure 13A** illustrates one embodiment of paper data service recommendations generated based on instructions in shown in **Figure 12D****.** Similarly, **Figure 13B** illustrates one embodiment of tension value recommendations generated based on instructions in **Figure 12E****.** Additionally, **Figure 13C** illustrates one embodiment of a plotting of tension values generated by service recommendation generator 285. In one embodiment, the generated service recommendations are displayed at GUI 290.

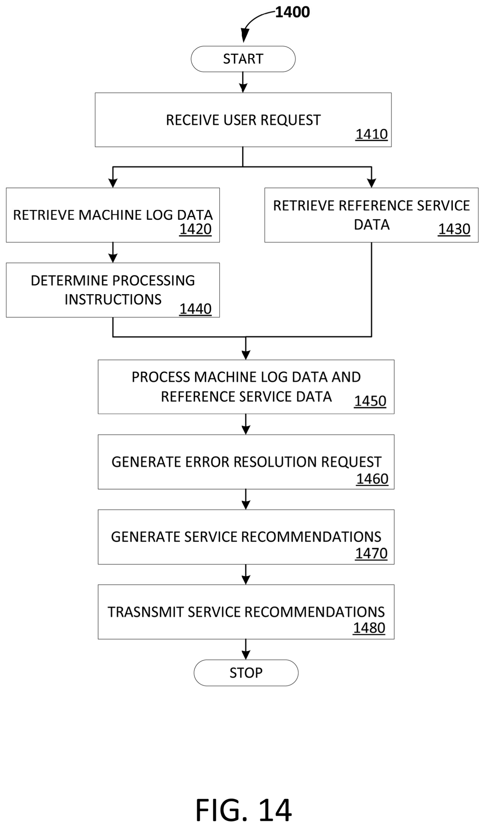

**Figure 14** is a flow diagram illustrating one embodiment a process 1400 for generating service recommendations. Process 1400 may be performed by processing logic that may include hardware (e.g., circuitry, dedicated logic, programmable logic, microcode, etc.), software such as instructions run on a processing device, or a combination thereof. In one embodiment, process 1400 is performed by error resolution mechanism 110.

At processing block 1410, a user request is received. As discussed above, the user request includes an error code, error code date, tenant ID and printer ID. At processing blocks 1420 and 1430, the machine log data (e.g., from the identified printer) and reference service data (e.g., from database 1060) are retrieved, respectively. At processing block 1440, processing instructions to process the machine log data and the reference service data are determined based on the error code. At processing block 1450, the machine log data and reference service data is processed according to the data processing instructions (e.g., to generate data tables). At processing block 1460, one or more error resolution requests are generated based on the processed machine log data and the reference service data. The error resolution requests are transmitted or otherwise made available to error resolution engine 280. At processing block 1470, service recommendations are generated (e.g., by error resolution engine 280) based on instructions included in the error resolution request (e.g., error resolution prompts) and are returned or otherwise made available to error resolution mechanism 110. At processing block 1480, the service recommendations are transmitted (e.g., to GUI 290).

The above-described mechanism automates data analysis for printer errors and provides data-driven insights to enable the service team to make faster and more effective decisions.

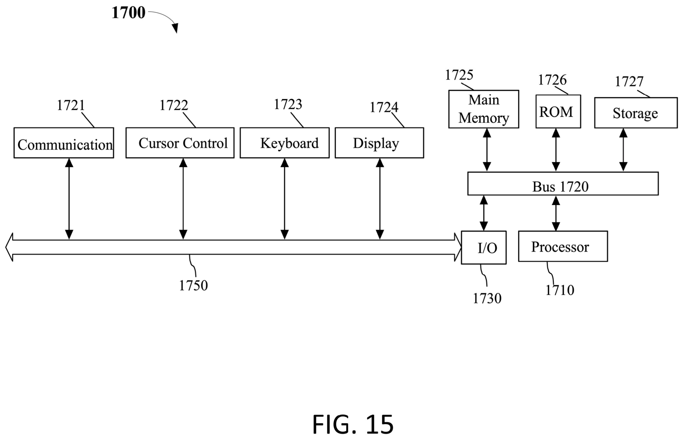

**Figure 15** illustrates a computer system 1700 on which computing device 12, computing devices 130 and/or platform management system 150 may be implemented. Computer system 1700 includes a system bus 1720 for communicating information, and a processor 1710 coupled to bus 1720 for processing information.

Computer system 1700 further comprises a random-access memory (RAM) or other dynamic storage device 1725 (referred to herein as main memory), coupled to bus 1720 for storing information and instructions to be executed by processor 1710. Main memory 1725 also may be used for storing temporary variables or other intermediate information during execution of instructions by processor 1710. Computer system 1700 also may include a read only memory (ROM) and/or other static storage device 1726 coupled to bus 1720 for storing static information and instructions used by processor 1710.

A data storage device 1727 such as a magnetic disk or optical disc and its corresponding drive may also be coupled to computer system 1700 for storing information and instructions. Computer system 1700 can also be coupled to a second I/O bus 1750 via an I/O interface 1730. A plurality of I/O devices may be coupled to I/O bus 1750, including a display device 1724, an input device (e.g., an alphanumeric input device 1723 and or a cursor control device 1722). The communication device 1721 is for accessing other computers (servers or clients). The communication device 1721 may comprise a modem, a network interface card, or other well-known interface device, such as those used for coupling to Ethernet, token ring, or other types of networks.

Embodiments of the invention may include various steps as set forth above. The steps may be embodied in machine-executable instructions. The instructions can be used to cause a general-purpose or special-purpose processor to perform certain steps. Alternatively, these steps may be performed by specific hardware components that contain hardwired logic for performing the steps, or by any combination of programmed computer components and custom hardware components.

Elements of the present invention may also be provided as a machine-readable medium for storing the machine-executable instructions. The machine-readable medium may include, but is not limited to, floppy diskettes, optical disks, CD-ROMs, and magneto-optical disks, ROMs, RAMs, EPROMs, EEPROMs, magnetic or optical cards, propagation media or other type of media/machine-readable medium suitable for storing electronic instructions. For example, the present invention may be downloaded as a computer program which may be transferred from a remote computer (e.g., a server) to a requesting computer (e.g., a client) by way of data signals embodied in a carrier wave or other propagation medium via a communication link (e.g., a modem or network connection).

The following clauses and/or examples pertain to further embodiments or examples. Specifics in the examples may be used anywhere in one or more embodiments. The various features of the different embodiments or examples may be variously combined with some features included and others excluded to suit a variety of different applications. Examples may include subject matter such as a method, means for performing acts of the method, at least one machine-readable medium including instructions that, when performed by a machine cause the machine to perform acts of the method, or of an apparatus or system according to embodiments and examples described herein.

Some embodiments pertain to Example 1 that includes a system comprising at least one physical memory device to store printer error resolution logic and one or more processors coupled with the at least one physical memory device to execute the printer error resolution logic to receive a subject error descriptor, generate processed data by data processing machine log data and reference service data, wherein the machine log data comprises machine log data associated with the subject error descriptor, perform a filtering operation to generate reference machine log data without subject error descriptors, compare the reference machine log data without error descriptors to the machine log data associated with the subject error descriptor to generate an error resolution request and transmit the processed data and the error resolution request to an advisor system for generation of one or more service recommendations for the subject error descriptor.

Example 2 includes the subject matter of Example 1, wherein the reference machine log data comprises machine log data associated with one or more machines.

Example 3 includes the subject matter of Examples 1 and 2, wherein the reference machine log data comprises machine log data associated with a first of the plurality of machines generated prior to an occurrence time of the subject error descriptor.

Example 4 includes the subject matter of Examples 1-3, wherein the printer error resolution logic further to perform a filtering operation to match metadata.

Example 5 includes the subject matter of Examples 1-4, wherein the machine log data further comprises event measurement data.

Example 6 includes the subject matter of Examples 1-5, wherein the printer error resolution logic further to perform a filtering operation to match event measurement data.

Example 7 includes the subject matter of Examples 1-6, wherein the printer error resolution logic further to generate target values based on the event measurement data.

Example 8 includes the subject matter of Examples 1-7, wherein the target values are generated by averaging values of the event measurement data.

Example 9 includes the subject matter of Examples 1-8, wherein averaging the event measurement data values comprises segregating the averaging with matching event cycles between the subject machine log data and the reference machine log data.

Example 10 includes the subject matter of Examples 1-9, wherein the subject error descriptor corresponds to one of a plurality of error descriptor types comprising tension, print quality and fans.

Example 11 includes the subject matter of Examples 1-10, further comprising a printer corresponding to the machine log data.

Some embodiments pertain to Example 12 that includes at least one computer readable medium having instructions stored thereon, which when executed by one or more processors, cause the processors to receive a subject error descriptor, generate processed data by data processing machine log data and reference service data, wherein the machine log data comprises machine log data associated with the subject error descriptor, perform a filtering operation to generate reference machine log data without subject error descriptors, compare the reference machine log data without error descriptors to the machine log data associated with the subject error descriptor to generate an error resolution request and transmit the processed data and the error resolution request to an advisor system for generation of one or more service recommendations for the subject error descriptor.

Example 13 includes the subject matter of Example 12, wherein the reference machine log data comprises machine log data associated with one or more machines.

Example 14 includes the subject matter of Examples 12 and 13, wherein the reference machine log data comprises machine log data associated with a first of the plurality of machines generated prior to an occurrence time of the subject error descriptor.

Example 15 includes the subject matter of Examples 12-14, wherein the printer error resolution logic further to perform a filtering operation to match metadata.

Example 16 includes the subject matter of Examples 12-15, wherein the machine log data further comprises event measurement data.

Some embodiments pertain to Example 17 that includes a method comprising receiving a subject error descriptor, generating processed data by data processing machine log data and reference service data, wherein the machine log data comprises machine log data associated with the subject error descriptor, performing a filtering operation to generate reference machine log data without subject error descriptors, comparing the reference machine log data without error descriptors to the machine log data associated with the subject error descriptor to generate an error resolution request and transmitting the processed data and the error resolution request to an advisor system for generation of one or more service recommendations for the subject error descriptor.

Example 18 includes the subject matter of Example 17, wherein the reference machine log data comprises machine log data associated with one or more machines.

Example 19 includes the subject matter of Examples 17 and 18, wherein the reference machine log data comprises machine log data associated with a first of the plurality of machines generated prior to an occurrence time of the subject error descriptor.

Example 20 includes the subject matter of Examples 17-19, wherein the printer error resolution logic further to perform a filtering operation to match metadata.

Whereas many alterations and modifications of the present invention will no doubt become apparent to a person of ordinary skill in the art after having read the foregoing description, it is to be understood that any particular embodiment shown and described by way of illustration is in no way intended to be considered limiting. Therefore, references to details of various embodiments are not intended to limit the scope of the claims, which in themselves recite only those features regarded as essential to the invention.

## Claims

1. A system comprising:
at least one physical memory device to store printer error resolution logic; and
one or more processors coupled with the at least one physical memory device to execute the printer error resolution logic to:
receive a subject error descriptor;
generate processed data by data processing machine log data and reference service data, wherein the machine log data comprises machine log data associated with the subject error descriptor;
perform a filtering operation to generate reference machine log data without subject error descriptors;
compare the reference machine log data without error descriptors to the machine log data associated with the subject error descriptor to generate an error resolution request; and
transmit the processed data and the error resolution request to an advisor system for generation of one or more service recommendations for the subject error descriptor.

2. The system of claim 1, wherein the reference machine log data comprises machine log data associated with one or more machines.

3. The system of claim 2, wherein the reference machine log data comprises machine log data associated with a first of the plurality of machines generated prior to an occurrence time of the subject error descriptor.

4. The system of claim 1, wherein the printer error resolution logic further to perform a filtering operation to match metadata.

5. The system of claim 1, wherein the machine log data further comprises event measurement data.

6. The system of claim 5, wherein the printer error resolution logic further to perform a filtering operation to match event measurement data.

7. The system of claim 6, wherein the printer error resolution logic further to generate target values based on the event measurement data.

8. The system of claim 7, wherein the target values are generated by averaging values of the event measurement data.

9. The system of claim 8, wherein averaging the event measurement data values comprises segregating the averaging with matching event cycles between the subject machine log data and the reference machine log data.

10. The system of claim 1, wherein the subject error descriptor corresponds to one of a plurality of error descriptor types comprising tension, print quality and fans.

11. The system of claim 1, further comprising a printer corresponding to the machine log data.

12. At least one computer readable medium having instructions stored thereon, which when executed by one or more processors, cause the processors to:
receive a subject error descriptor;
generate processed data by data processing machine log data and reference service data, wherein the machine log data comprises machine log data associated with the subject error descriptor;
perform a filtering operation to generate reference machine log data without subject error descriptors;
compare the reference machine log data without error descriptors to the machine log data associated with the subject error descriptor to generate an error resolution request; and
transmit the processed data and the error resolution request to an advisor system for generation of one or more service recommendations for the subject error descriptor.

13. The computer readable medium of claim 12, wherein the reference machine log data comprises machine log data associated with one or more machines.

14. A method comprising:
receiving a subject error descriptor;
generating processed data by data processing machine log data and reference service data, wherein the machine log data comprises machine log data associated with the subject error descriptor;
performing a filtering operation to generate reference machine log data without subject error descriptors;
comparing the reference machine log data without error descriptors to the machine log data associated with the subject error descriptor to generate an error resolution request; and
transmitting the processed data and the error resolution request to an advisor system for generation of one or more service recommendations for the subject error descriptor.

15. The method of claim 14, wherein the printer error resolution logic further to perform a filtering operation to match metadata.
